# EUROPÄISCHE PATENTSCHRIFT

(11) **EP 1 587 707 B1**
(45) Veröffentlichungstag und Bekanntmachung des Hinweises auf die Patenterteilung: **12.11.2008**
(21) Anmeldenummer: 03775270.6
(22) Anmeldetag: 31.10.2003
(51) Int. Cl.: B60N 2/58

(54) **VERFAHREN ZUM HERSTELLEN EINES BEFESTIGUNGSTEILS**
METHOD FOR PRODUCTION OF A FIXING PIECE
PROCEDE DE PRODUCTION D'UNE PIECE DE FIXATION

(30) Priorität: 29.01.2003 DE 10303358
(43) Veröffentlichungstag der Anmeldung: 26.10.2005
(73) Patentinhaber: Firma Gottlieb Binder GmbH & Co. KG, 71088 Holzgerlingen (DE)
(72) Erfinder: NÄGELE, Klaus, 78727 Oberndorf/N (DE); SCHULTE, Axel, 72076 Tübingen (DE)
(74) Vertreter: Bartels & Partner
(86) Internationale Anmeldenummer: PCT/EP2003/012107
(87) Internationale Veröffentlichungsnummer: WO 2004/067314

(56) Entgegenhaltungen:
- EP-A- 0 403 815
- EP-A- 1 060 092
- EP-A- 1 243 462
- DE-A- 10 054 073
- DE-C- 19 952 416
- DE-U- 29 822 649
- FR-A- 2 750 690
- US-A- 6 048 025
- US-A- 6 124 019

## Beschreibung

Die Erfindung betrifft ein Verfahren zum Herstellen eines Befestigungsteils, das insbesondere dem Befestigen von Bezugmaterialien an Polsterteilen bei Kraftfahrzeugsitzen dient, bei dem ein Profilkörper mit einer separat hergestellten Annähfahne verbunden wird, die zumindest teilweise in eine Aufnahmeöffnung im Profilkörper eingreift, wobei der Profilkörper und die Annähfahne zumindest an ihrer gemeinsamen Verbindungsstelle überwiegend aus Kunststoffmaterialien bestehen.

Durch das DE-U-89 07 459 aus der ein Verfahren zum Herstellen eines Befestigengsteils entsprechend dem Oberbegriff des Anspruchs 1 bekannt ist, ist ein Einzugstab zur Profilformung von außenseitig durch einen Bezugstoff abgedeckten Polstermaterialien bei Polstermöbeln und dergleichen gepolsterten Sitzteilen bekannt, bestehend aus einem einstückig stranggepreßten Profilstab aus Kunststoff, mit dem eine gesondert hergestellte Annähfahne für seine Verbindung mit dem Bezugstoff zwischen flachen Profilteilen fest verschweißt ist. Der Profilstab weist ein zweischenkliges Querschnittsprofil auf, dessen beide Profilschenkel an ihrer Basis durch einen schmalen Verbindungssteg miteinander verbunden sind und einen von diesem ausgehenden Aufnahmespalt für die Annähfahne begrenzen, indem ihre feste Verschweißung mit den angrenzenden Innenflächen der beiden Profilschenkel vorgenommen ist.

Zum Herstellen der bekannten Lösung eines Befestigungsteils, bestehend aus dem Einzugstab als Profilkörper und der Annähfahne, wird also ein Schweißverfahren eingesetzt, bei dem zum Herstellen der Verbindung die Kunststoffmaterialien von Profilkörper und Annähfahne aufgeschmolzen und durch Verpressen miteinander verbunden werden. Bei dem bekannten Schweißverfahren kommt es durch das Aufschmelzen der Kunststoffmaterialien zu Schädigungen, insbesondere im Übergangsbereich zwischen der Schweißverbindungsnaht und dem sich anschließenden Kunststoffmaterial der zu verbindenden Teile, was die Abreißfestigkeit entsprechend reduziert. Kommt es während des Schweißvorganges zu thermischen Spitzen, besteht die Gefahr, dass unmittelbar die Schweißnaht selbst geschädigt wird. Darüber hinaus ist bei dem bekannten Verfahren ein zusätzlicher Schweißwärmeeintrag notwendig, um die Schweißverbindung herzustellen, so dass der Maschinen- und Energieaufwand bei dem bekannten Verfahren erhöht ist, was mit entsprechenden hohen Herstellkosten einhergeht. Die dahingehenden Nachteile würden auch auftreten, sofern man in Fortführung des bekannten Verfahrens nach dem deutschen Gebrauchsmuster die Schweißverbindung über Einbringen eines Zusatzwerkstoffes realisieren würde, was dort jedoch nicht unmittelbar offenbart ist.

Durch die EP 1 060 092 B1 ist ein weiteres Befestigungssystem für einen Fahrzeugsitz bekannt mit einem Polsterteil aus einem geschäumten Material, das von mindestens einem Polsterbezugteil umgeben ist, das mit einer als Verhakungsmittel dienenden Profilleiste als Profilkörper verbunden ist, die außenumfangsseitig Verhakungselemente aufweist, wobei ein der Form der jeweiligen Profilleiste angepaßter Längskanal im Schaumpolsterteil vorhanden ist. Der dahingehende Längskanal im Polsterteil weist in seiner Längsrichtung Ausnehmungen auf, die dem Eingriff der Verhakungselemente des Profilkörpers dienen und die in den Längskanal münden sowie rinnenartig ausgebildet sind. Die bekannte Profilleiste als Profilkörper ist in der Art eines Halbrundstabes ausgebildet und weist somit auf ihrer dem Schaum zugewandten Seite eine konvex ausgebildete Anlagefläche auf; auf ihrer gegenüberliegenden Seite ist die Profilleiste aber eben ausgebildet und mittig mit einem schlitzartigen Aufnahmekanal als Aufnahmeöffnung für die Annähfahne versehen, an der wiederum das Polsterbezugsteil festgelegt wird.

Zum Herstellen dieser bekannten Befestigungslösung kann wiederum die Annähfahne mit der Profilleiste als Profilkörper verschweißt werden - wie vorstehend beschrieben - oder die dahingehende Verbindung wird über eine Klebstofflösung realisiert, wobei ein speziell geeigneter Kunststoff-Klebstoff, wie er auf dem Markt frei erhältlich ist, die benötigte feste Verbindung herstellt. Da dahingehende Klebstoffe regelmäßig sehr teuer in der Anschaffung sind, verteuern sie auch die Herstellung des Befestigungssystems und sofern der Klebstoff in der Art eines Zweikomponenten-Systems ausgebildet ist, muß dieser zum Herstellen der festen Verbindung erst entsprechend aushärten, was die Herstellzeiten und mithin die Kosten entsprechend verlängert. Da eine Vielzahl der heute eingesetzten Kunststoffkleber lösemittelhaltig ist, kommt es bei einem Verdunsten des Lösemittels zu einer Versprödung der Klebstoffstellen, so dass zumindest langfristig gesehen es während der praktischen Einsatzdauer zu einem Versagen an der Klebstoffnaht und mithin an der Verbindungsstelle zwischen Profilleiste und Annähfahne kommen kann. Auch sind die lösemittelhaltigen Klebstoffe aus Umweltschutzgründen nicht zu befürworten und erschweren das spätere Recycling von Sitzen und deren Teilen.

Ausgehend von diesem Stand der Technik liegt der Erfindung die Aufgabe zugrunde, die bekannten Lösungen dahingehend weiter zu verbessern, dass das Herstellverfahren für das genannte Befestigungsteil, bestehend aus Profilkörper und einer Annähfahne, sich rasch und mit geringen Herstellkosten realisieren läßt und das dennoch eine hoch feste Verbindung erreichbar ist sowie gestiegenen Umweltaspekten genüge getan wird. Eine dahingehende Aufgabe löst ein Verfahren mit den Merkmalen des Patentanspruches 1 in seiner Gesamtheit.

Dadurch, dass gemäß dem kennzeichnenden Teil des Patentanspruches 1 die Schmelztemperaturbereiche der eingesetzten Kunststoffmaterialien von Profilkörper und Annähfahne derart unterschiedlich gewählt werden, dass das eine Kunststoffmaterial beim Erzeugen der Verbindung unter thermischer Einwirkung im wesentlichen formstabil bleibt und dass das andere Kunststoffmaterial in Ausnehmungen, gebildet von dem einen Kunststoffmaterial, eindringt und bei Erkalten in den Ausnehmungen verfestigt wird, wird eine Art Intrusionslösung verwirklicht, bei der ein Teil des aufgeschmolzenen bzw. plastifizierbaren Kunststoffmaterials in Hohlräume (Ausnehmungen) des anderen Kunststoffmaterials eindringt und sich dort unter Herstellen einer formschlüssigen Verbindung verfestigt, wobei das Kunststoffmaterial mit den Ausnehmungen aufgrund des anders liegenden Schmelztemperaturbereiches in seiner Gefügeanordnung unberührt bleibt. Es kommt mithin bei der Realisierung des erfindungsgemäßen Verbindungsverfahrens nicht zu Schweiß- oder Klebstoffverbindungen, sondern vielmehr wird in der Art eines Eingieß- oder Intrusionsverfahrens der Kunststoffwerkstoff eines Teils der Verbindung in den Kunststoffwerkstoff des anderen Verbindungsteils formschlüssig eingebettet und dergestalt festgehalten.

Bei dem dahingehenden Einbettvorgang werden die Kunststoffmaterialien thermisch weder geschädigt noch beansprucht, was dem Erzeugen einer festen Verbindung an der Verbindungsstelle von Profilkörper und Annähfahne zugute kommt. Durch den Eingieß- bzw. Intrusionsvorgang ist eine Vielzahl von Verankerungsmöglichkeiten zwischen den Kunststoffmaterialien gebildet, was zu hohen Haltekräften führt und es ist für einen Durchschnittsfachmann auf dem Gebiet der dahingehenden Verbindungstechnologie überraschend, dass er ohne ein Schweißverfahren und ohne Zusatzmateralien, wie Klebstoff, zu derart hochfesten Verbindungen kommt, wobei Zug- und Reißversuche gezeigt haben, dass eher die Ausgangsteile, wie Profilkörper oder Annähfahne, versagen als die derart durch Intrusion hergestellte Verbindung. Durch Verzicht auf lösemittelhaltige Klebstoffe ist darüber hinaus gestiegenen Umweltaspekten Rechnung getragen und das Befestigungsteil läßt sich ohne weiteres umweltschonend recyceln.

Bei einer bevorzugten Ausführungsform des erfindungsgemäßen Verfahrens ist vorgesehen, dass der Profilkörper aus einem extrudierbaren Kunststoffmaterial gebildet wird und dass die Annähfahne aus einem non-woven(nicht gewebt)-Material, insbesondere aus einem Vlies besteht. Bei der dahingehenden Ausgestaltung dringt dann das Kunststoffmaterial des Profilkörpers unter thermischer Einwirkung in die Zwischenabstände (Ausnehmungen) des Fasergeleges des Vlieses ein, um derart die Intrusionsverbindung herzustellen. Es hat sich bei praktischen Versuchen dabei gezeigt, dass als Eindringtiefe für das an geschmolzene Kunststoffmaterial des Profilkörpers nur wenige Fasergelegeschichten auf der Vliesseite benötigt werden, um die wirksame hochfeste Verbindung zu erzeugen.

Als besonders vorteilhaft hat es sich erwiesen, den Profilkörper selbst aus einem Weich-Polyvinylchlorid-Werkstoff (PVC) zu bilden oder aus einem Polypropylen-Blockcopolymer. Vorzugsweise besteht dabei ferner die Annähfahne aus einem Polyester-non-woven-Material.

Bei einer besonders bevorzugten Ausführungsform des erfindungsgemäßen Verfahrens wird zum Erzeugen der Verbindung in der Aufnahmeöffnung des Profilkörpers zeitlich unmittelbar seinem Extrusionsvorgang nachfolgend die Annähfahne eingebracht, wobei durch Aneinanderpressen der die Aufnahmeöffnung begrenzenden Wandteile des Profilkörpers mit den aufgenommenen Teilen der Annähfahne der Eindringvorgang im genannten Sinne ausgelöst wird. Es besteht aber auch die Möglichkeit, zeitgleich mit dem Extrudieren des Profilkörpers die Annähfahne ein- und anzubringen.

Sofern in der Beschreibung und in den Patentansprüchen auf die Angabe "Annähfahne" zurückgegriffen wird, um das Verbindungsteil zwischen Polsterbezug und Polsterkörper, insbesondere in Form von elastisch nachgiebigen Schaumteilen, zu beschreiben, wird es nicht als zwingend angesehen, dass der Polsterbezug, beispielsweise in Form eines Polsterbezugstoffes eines Kraftfahrzeugsitzes, mit der Annähfahne vernäht wird, sondern vielmehr kann die dahingehende Verbindung auch über Klebstoffe, thermisches Schweißen od. dgl. erzeugt werden. Ferner braucht der Profilkörper nicht unmittelbar im Schaum der einzelnen Polsterkörper direkt verankert zu werden, sondern vielmehr besteht auch die Möglichkeit, was im Stand der Technik nachweisbar ist, in den Schaum profilartige Verhakungskörper einzulegen, in die dann der leistenartige Profilkörper einclipbar ist zum Festlegen des Polsterbezuges an den genannten Polsterteilen.

Im folgenden wird das erfindungsgemäße Verfahren anhand der Zeichnung näher beschrieben. Dabei zeigen in prinzipieller und nicht maßstäblicher Darstellung die
- Fig.1: in perspektivischer Ansicht einen Teilausschnitt aus einem geschäumten Polsterteil mit Schlitzöffnung und Längskanal;
- Fig.2: eine perspektivische Darstellung eines Teilausschnittes einer Profilleiste mit Annähfahne, wie sie in den Längskanal des Polsterteils nach der Fig.1 einsetzbar ist;
- Fig.3: zwei verschiedene Rasterelektronen-Mikroskopaufnahmen von mit Gold besputterten Teilen betreffend die Verbindungsstelle zwischen Profilkörper und Annähfahne nach der Fig.2 bezogen auf einen Teil der dahingehenden Verbindungs-Wandabschnitte.

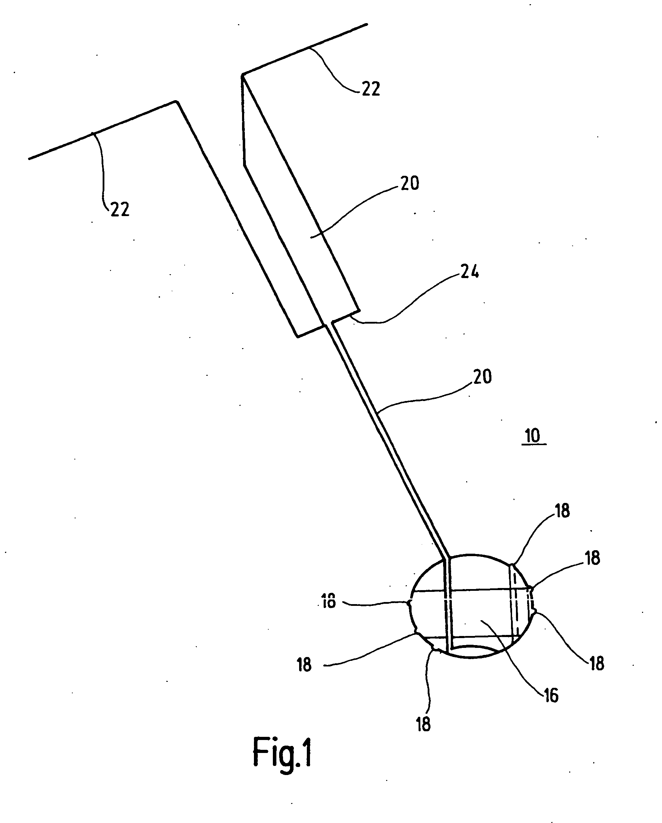

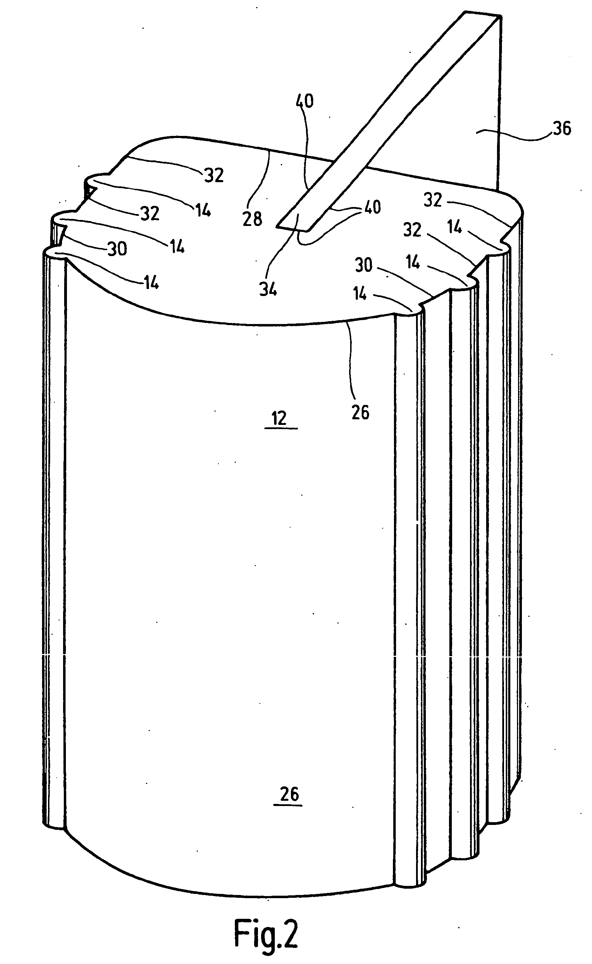

Das in den Fig. 1 und 2 dargestellte Befestigungssystem ist für einen Fahrzeugsitz (nicht dargestellt) verwendbar, beispielsweise in Form eines Kraftfahrzeug- oder Fluggastsitzes. Es sind jedoch auch Anwendungen im Bereich der Medizintechnik bei Behandlungsstühlen oder bei Gebrauchsmöbeln im Wohnbereich denkbar. Dahingehende Sitze setzen sich grundsätzlich aus einem Sitzteil und einem Rückenlehnenteil zusammen, die mit einer Polsterung versehen sind, insbesondere in Form einzelner Polsterteile 10 (vgl. Fig.1). Dahingehende Polsterteile 10 bestehen aus formgeschäumtem Kunststoffmaterial, das nach außen hin von mindestens einem Polsterbezugteil (nicht dargestellt), beispielsweise in Form von Polsterbezugstoffen od. dgl., umgeben ist. Um den Polsterbezug mit dem Polsterteil 10 zu verbinden, dient das in Rede stehende Befestigungsteil, das entlang von vorgebbaren Nahtverläufen das Polsterbezugteil am Polsterteil 10 jeweils festlegt.

Das Befestigungsteil weist hierfür mindestens einen als Verhakungsmittel dienenden leisten- oder stabartigen Profilkörper 12 auf, der flexibel ist und entlang von beliebig vorgebbaren Trennähten am Polsterbezugteil mit diesem verbunden ist. Wie dies insbesondere die Fig.2 zeigt, weist der Profilkörper 12 außenumfangsseitig Verhakungselemente 14 auf. Im Polsterteil 10 ist, wie dies die Fig.1 zeigt, ein der Form des jeweiligen Profilkörpers 12 angepaßter Längskanal 16 vorhanden, der in seiner Längsrichtung weitere Längskanäle 18 aufweist, die für den Eingriff mit den Verhakungselementen 14 vorgesehen sind. Der Längskanal 16 ist im Querschnitt im wesentlichen kreisrund ausgebildet, wobei eine in den Längskanal 16 mündende Schlitzöffnung 20 an der Außenseite des geschäumten Polsterteils 10 austritt. Wie die Fig.1 zeigt, verbreitert sich die Schlitzöffnung 20 vom Längskanal 16 zu der Außenseite 22 in einer absatzweisen Stufe 24 im freien Querschnitt. Die Ausnehmungen 18 des Längskanals 16 liegen diametral zur Längsausrichtung einander gegenüber und münden nutartig in den Längskanal 16. Die weiteren Längskanäle 18 bilden dabei rinnenartige Hohl-Profilstegabschnitte aus.

Wie die Fig.1 des weiteren zeigt, sind die Verhakungselemente 14 einstükkig Teil des Profilkörpers 12 und können als profilartige Fortsätze in die rinnenartigen weiteren Längskanäle 18 entlang ihrer gesamten Längsausrichtung eingreifen. Der jeweilige, im zugeordneten Längskanal 16 einzusetzende Profilkörper 12 ist auf seiner der Schlitzöffnung 20 abgewandten Seite mit einer konvex ausgebildeten Anlagefläche 26 versehen und auf seiner der Schlitzöffnung zugewandten Seite 28 im übrigen eben ausgebildet. Die Anlagefläche 26 ist dabei randseitig entlang der Längsausrichtung des Profilkörpers 12 von den nächstkommenden Verhakungselementen 14 begrenzt. Das jeweilige Abschnittsstück 30 zwischen zwei Verhakungselementen 14, die seitlich der Anlagefläche 26 nachfolgen, ist ebenfalls konvex ausgebildet und mithin mit einer Rundung versehen, wohingegen die darauffolgenden Abschnitte 32 einer jeden Seitenwand des Profilkörpers 12 eben ausgebildet sind.

Die eben verlaufende Rückseite 28 des Profilkörpers 12 ist mittig mit einem schlitzartigen Aufnahmekanal 34 als Aufnahmeöffnung versehen, der in Verlängerung bei eingesetztem Profilkörper 12 im Längskanal 16 in die Schlitzöffnung 20 mündet. Diese schlitzartige Aufnahmeöffnung 34 des Profilkörpers 12 dient der Aufnahme einer sog. Annähfahne 36, die in der Art eines Verbindungsbandes ausgebildet sich zwischen dem Profilkörper 12 und dem entlang einer Nahtstelle abgespannten Polsterbezugteil (nicht dargestellt) erstreckt, wobei das in Blickrichtung auf die Fig.2 gesehen hintere freie Ende der Annähfahne 36 mit dem dahingehenden Polsterbezugteil fest verbunden ist, sei es durch Annähen, Heften, Verschweißen, Verkleben oder dergleichen. Der Begriff "Annähfahne" ist also nicht nur auf solche Verbindungen beschränkt, bei denen der Polsterbezug an das Verbindungsband 36 angenäht wird. Über die genannte Annähfahne 36 läßt sich also die Verbindung zwischen dem Profilkörper 12 und dem Polsterbezug herstellen, wobei sich dann die Annähfahne 36 unter Spannung durch die Schlitzöffnung 20 im Polsterteil 10 erstreckt und das Polsterbezugmaterial in Richtung des Längskanals 16 zu ziehen sucht.

Der im wesentlichen massiv ausgebildete leistenartige Profilkörper 12, den man in der Fachsprache üblicherweise auch mit "Kederprofil" bezeichnet, ist vorzugsweise ein Monoextrudat und besteht aus weichem Kunststoffmaterial. Bevorzugt kommt dabei für das Profilmaterial ein Weich-Polyvinylchlorid-Werkstoff (PVC) zum Einsatz, dessen Schmelzbereich vorzugsweise > 75°C liegt. Die Verarbeitungstemperatur des Materials liegt bevorzugt zwischen 140°C und 160°C. An die Stelle des genannten Weich-PVC-Werkstoffes kann als Profilmaterial auch ein Polypropylen-Blockcopolymer treten mit einer Erweichungstemperatur von ca. 125°C, mit einer Schmelztemperatur von ca. 163°C und mit einer Verarbeitungstemperatur bei ca. 200°C. Des weiteren kann das Profil auch aus einem Polyethylen-Werkstoff gebildet sein, dessen Erweichungspunkt bei ca. 90°C liegt und dessen Schmelztemperatur ca. 115°C beträgt. Als Annähfahne 36 findet bevorzugt ein Polyester-non-woven-Material Anwendung mit einer Schmelztemperatur von 256°C und einer Erweichungstemperatur von mehr als 220°C.

Im folgenden wird nunmehr das erfindungsgemäße Verfahren zum Herstellen eines Befestigungsteils, bestehend aus dem Profilkörper 12 und der Annähfahne 36, näher beschrieben, das, wie bereits dargelegt, insbesondere dem Befestigen von Polsterbezugmaterialien an Polsterteilen bei Kraftfahrzeugsitzen dient, bei dem der Profilkörper 12 mit der separat hergestellten Annähfahne 36 verbunden wird, die entlang ihres einen freien Endes in die Aufnahmeöffnung 34 des Profilkörpers 12 eingreift, wobei, wie bereits ausgeführt, der Profilkörper 12 und die Annähfahne 36 zumindest an ihrer gemeinsamen Verbindungsstelle überwiegend aus Kunststoffmaterialien der vorstehend beschriebenen Art bestehen.

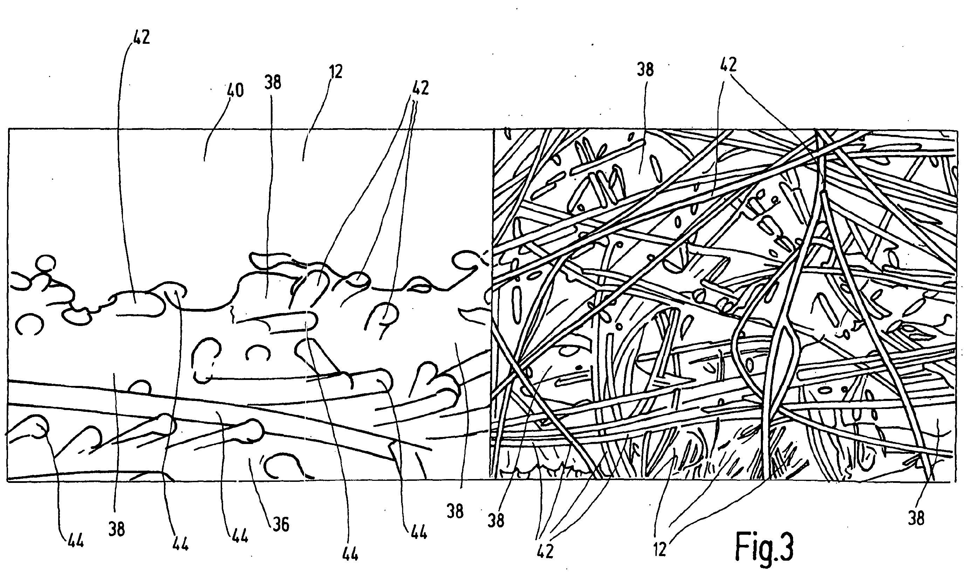

Dadurch, dass die genannten Schmelztemperaturbereiche der eingesetzten Kunststoffmaterialien von Profilkörper 12 und Annähfahne 36, wie vorstehend beschrieben, derart unterschiedlich gewählt werden, bleibt das eine Kunststoffmaterial beim Erzeugen der Verbindung unter thermischer Einwirkung im wesentlichen formstabil und das andere Kunststoffmaterial dringt in Ausnehmungen 38 (vgl. Fig.3) gebildet von dem einen Kunststoffmaterial ein und verfestigt sich beim Erkalten in den genannten Ausnehmungen 38. Zum Erzeugen der eigentlichen Verbindung wird in die Aufnahmeöffnung 34 des Profilkörpers 12 zeitlich unmittelbar seinem Extrusionsvorgang nachfolgend oder zeitgleich die Annähfahne 36 eingebracht, wobei durch anschließendes Aneinanderpressen der die Aufnahmeöffnung 34 begrenzenden Wandteile 40 des Profilkörpers 12 mit den aufgenommenen Teilen der Annähfahne 36 der Eindringvorgang (Intrusion) ausgelöst wird.

Die flexibel ausgestaltete Annähfahne 36 besteht im wesentlichen aus einem Kunststoff-Vlies oder aus einem sonstigen non-woven-Material, das nicht gewebte bzw. nicht gewirkte Flächengebilde aus verschiedenen Fasermaterialien bezeichnet. Die genannten Fasern können auch aus Endlosfasern oder Stapelfasern gebildet sein und die aus den Einzelfasern 42 aufgebauten Faserlagen der vliesartigen Annähfahne 36 sind in Blickrichtung auf die Fig.3 gesehen entsprechend links dargestellt. Wie die die Verbindung von Profilkörper 12 mit Annähfahne 36 betreffende Fig.3 des weiteren zeigt, dringt das Kunststoffmaterial des Profilkörpers 12 bedingt durch die Intrusion in die Zwischenabstände zwischen den Einzelfasern 42 der Faserlagen 44 der Annähfahne 36 ein und umfaßt die dahingehenden Fasern 42, ohne dass die Kunststoffmaterialien von Annähfahne 36 und Profilkörper 12 miteinander verschweißt würden; vielmehr werden die Fasern 42 im Sinne eines Eingießens oder Einbettens von dem Kunststoffmaterial des Profilkörpers 12 formschlüssig umfaßt, wobei Versuche gezeigt haben, dass es für eine hochfeste Verbindung genügt, wenn entlang der Wandteile 40 die ersten benachbarten Faserlagen 40 der Annähfahne 36 umgriffen werden und eine vollständige Intrusion des gesamten Vliesquerschnittes der Annähfahne 36 mit den Fasergelegen ist für eine hochfeste Verbindung nicht notwendig.

Da durch das Umgießen des einen Kunststoffmaterials mit dem anderen Kunststoffmaterial es nicht zu einem Verschweißen der Kunststoffmaterialien miteinander kommt, ist jedenfalls der beim Schweißen sonst übliche, gegebenenfalls schädigende Wärmeeintrag vermieden und da zumindest das Kunststoffmaterial des einen Verbindungsteils ungeschädigt bleibt, ergibt sich eine Vielzahl von Verankerungsstellen, die die hochfeste Verbindung ermöglichen. Es hat sich gezeigt, dass eher der Vlieswerkstoff in Zug-oder Abreißversuchen versagt als die derart über einen Intrusionsvorgang erhaltene Verbindung von Profilkörper 12 mit Annähfahne 36.

In nicht näher dargestellten Ausführungsbeispielen wäre es auch denkbar, die Kunststoffmaterialien derart mit ihren unterschiedlichen Schmelzbereichen auszuwählen, dass das Material der Annähfahne 36 in die Zwischenabstände des Kunststoffmaterials des Profilkörpers 12 intrudiert oder dass die Materialien derart gewählt werden, dass ein wechselweises Intrudieren oder Ineinanderfließen möglich ist. Anstelle der genannten non-woven-Materialien können auch gewebte oder gewirkte Fasergelege treten, wobei jedoch im Hinblick auf die dann derart hergestellte Verbindungsordnung gegebenenfalls weniger Verankerungs- und Anknüpfpunkte für das einzugießende Kunststoffmaterial verbleiben, so dass mit Festigkeitseinbußen an der Verbindungsstelle zu rechnen ist.

## Patentansprüche

1. Verfahren zum Herstellen eines Befestigungsteils (12,36), das insbesondere dem Befestigen von Bezugmaterialien an Polsterteilen bei Kraftfahrzeugsitzen dient, bei dem ein Profilkörper (12) mit einer separat hergestellten Annähfahne (36) verbunden wird, die zumindest teilweise in eine Aufnahmeöffnung (34) im Profilkörper (12) eingreift, wobei der Profilkörper (12) und die Annähfahne (36) zumindest an ihrer gemeinsamen Verbindungsstelle überwiegend aus Kunststoffmaterialien bestehen, **dadurch gekennzeichnet, dass** die Schmelztemperaturbereiche der eingesetzten Kunststoffmaterialien von Profilkörper (12) und Annähfahne (36) derart unterschiedlich gewählt werden, dass das eine Kunststoffmaterial beim Erzeugen der Verbindung unter thermischer Einwirkung im wesentlichen formstabil bleibt und dass das andere Kunststoffmaterial in Ausnehmungen (38), gebildet von dem einen Kunststoffmaterial, eindringt und beim Erkalten in den Ausnehmungen (38) verfestigt wird.

2. Verfahren nach Anspruch 1, **dadurch gekennzeichnet, dass** der Profilkörper (12) aus einem extrudierbaren Kunststoffmaterial gebildet wird und dass die Annähfahne (36) aus einem non-woven-Material, insbesondere aus einem Vlies besteht oder aus einem sonstigen offenporig gewebten Material.

3. Verfahren nach Anspruch 2, **dadurch gekennzeichnet, dass** der Profilkörper (12) aus Weich-Polyvinylchlorid-Werkstoff gebildet wird oder aus einem Polypropylen-Blockcopolymer und dass die Annähfahne (36) aus einem Polyester-non-woven-Material besteht.

4. Verfahren nach einem der Ansprüche 1 bis 3, **dadurch gekennzeichnet, dass** zum Erzeugen der Verbindung in die Aufnahmeöffnung (34) des Profilkörpers (12) zeitlich unmittelbar seinem Extrusionsvorgang nachfolgend oder zeitgleich die Annähfahne (36) angebracht wird und dass durch Aneinanderpressen der die Aufnahmeöffnung (34) begrenzenden Wandteile des Profilkörpers (12) mit den aufgenommenen Teilen der Annähfahne (36) der Eindringvorgang ausgelöst wird.

## Claims

1. Method of manufacturing a fixing piece (12, 36), which particularly serves for the fixing of covering material to cushion pieces for vehicle seats, whereby a profile body (12) is connected to a separately produced sewn tag (36) which at least partly engages in a housing opening (34) in the profile body (12), whereby the profile body (12) and the sewn tag (36), at least in the common jointing positions thereof, are predominantly made of plastic materials, **characterised in that** the melting temperature ranges of the plastic materials used for the profile body (12) and sewn tag (36) are selected to differ such that the one plastic material remains essentially stable in form under thermal effect during generation of the joint and the other plastic material flows into recesses (38) formed in the first plastic material and is solidified in the recesses (38) on cooling.

2. Method according to claim 1, **characterised in that** the profile body (12) is made from an extrudable plastic material and that the sewn tag (36) consists of a non-woven material, in particular of a fleece or of another open-pore woven material.

3. Method according to claim 2, **characterised in that** the profile body (12) is made from soft polyvinyl chloride material or from a polypropylene block copolymer and that the sewn tag (36) is made from a polyester non-woven material.

4. Method according to one of claims 1 to 3, **characterised in that** to generate the joint in the housing opening (34) of the profile body (12) the sewn tag (36) is attached immediately following or simultaneously with its extrusion process, and that the intrusion process is triggered by pressing together the wall parts of the profile body (12) delimiting the housing opening (34) with the absorbed parts of the sewn tag (36).

## Revendications

1. Procédé de production d'une pièce ( 12, 36 ) de fixation, qui sert notamment à fixer des matériaux de revêtement sur des parties de coussin pour des sièges de véhicule automobile, dans lequel on relie un corps ( 12 ) profilé à un drapeau ( 36 ) de couture, qui est fabriqué séparément et qui pénètre au moins en partie dans une ouverture ( 34 ) de réception du corps ( 12 ) profilé, le corps ( 12 ) profilé et le drapeau ( 36 ) de couture étant constitués au moins en leur point de liaison commun d'une manière prépondérante en matière plastique, **caractérisé en ce que** l'on choisit différemment les domaines de fusion des matières plastiques utilisées du corps ( 12 ) profilé et du drapeau ( 36 ) de couture de façon à ce que l'une des matières plastiques conserve sensiblement sa forme sous un effet thermique lors de la production de la liaison et **en ce que** l'autre matière plastique soit enfoncée dans des évidements ( 38 ) formés par l'une des matières plastiques et soit solidifiée dans les évidements ( 38 ) lors du refroidissement.

2. Procédé selon la revendication 1, **caractérisé en ce que** l'on forme le corps ( 12 ) profilé en une matière plastique pouvant être extrudée et **en ce que** le drapeau ( 36 ) de couture est constitué d'une matière non tissé notamment d'un non tissé ou d'une matière tissée autre à pores ouverts.

3. Procédé selon la revendication 2, **caractérisé en ce que** l'on forme le corps ( 12 ) profilé en un matériau de poly( chlorure de vinyle ) souple ou en un copolymère séquencé de polypropylène et **en ce que** le drapeau ( 36 ) de couture est en une matière non tissée en polyester.

4. Procédé suivant l'une des revendications 1 à 3, **caractérisé en ce que,** pour produire la liaison, on met le drapeau ( 36 ) de couture dans l'ouverture ( 34 ) de réception du corps ( 12 ) profilé en même temps que son opération d'extrusion ou immédiatement après et **en ce que** l'on déclenche l'opération d'enfoncement en pressant les unes sur les autres les parties de paroi du corps ( 12 ) profilé, qui délimitent l'ouverture ( 34 ) de réception et les parties du drapeau ( 36 ) de couture qui y sont reçues.
